# EUROPEAN PATENT APPLICATION

(11) **EP 4 636 039 A1**
(43) Date of publication of application: **22.10.2025**
(21) Application number: 23902767.5
(22) Date of filing: 13.12.2023
(51) Int. Cl.: C08L 71/02

(54) **PHOTOCURABLE COMPOSITION, AND PHOTOCURABLE COMPOSITION FOR 3D PRINTING AND USE THEREOF**

(30) Priority: 14.12.2022 CN 202211608271
(71) Applicant: Changzhou Tronly New Electronic Materials Co., Ltd, Changzhou, Jiangsu 213011 (CN); Changzhou Tronly Advanced Electronic Materials Co., Ltd., Changzhou, Jiangsu 213159 (CN)
(72) Inventor: QIAN, Bin, Hangzhou, Jiangsu 213159 (CN)
(74) Representative: Ullrich & Naumann PartG mbB
(86) International application number: PCT/CN2023/138567
(87) International publication number: WO 2024/125573

(57) **Abstract**

The present invention provides a photocurable composition, a photocurable composition for 3D printing and a use thereof. The photocurable composition comprises: 3 to 20 parts of a cationically polymerizable compound; 10 to 70 parts of a free-radically polymerizable compound; and 0.2 to 20 parts of a photoinitiator. The cationically polymerizable compound comprises an oxetane polymer, and the oxetane polymer is formed by polymerizing compounds represented by formula (I) and formula (II). The photocurable composition of the present invention has outstanding toughness, and maintains high heat resistance on this basis, and other mechanical properties can reach relatively good levels.

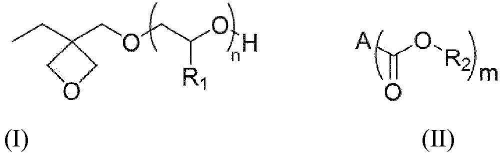

## Description

The present application is based on and claims priority to Chinese application No. 202211608271.6 filed on December 14, 2022, the disclosure of which is incorporated by reference herein in its entirety.

### TECHNICAL FIELD

The present invention relates to the field of additive manufacturing, and specifically relates to a photocurable composition, a photocurable composition for 3D printing, and uses thereof.

### BACKGROUND

In recent years, additive manufacturing has received great attention and interest from the industry and researchers. As additive manufacturing offers almost unlimited possibilities for rapid prototyping, it has been applied in many research fields, such as mechanical engineering, medicine, materials science, and chemistry. As the process develops and improves, the number of applications of additive manufacturing is increasing. Most photosensitive resin materials for additive manufacturing have problems such as brittleness and large volume shrinkage, which greatly affects the application of photosensitive resin materials in the field of 3D printing. Therefore, the objects manufactured by additive manufacturing are still used as conceptual prototypes rather than functional materials.

In order to expand the application range of radiation-curable compositions produced by additive manufacturing processes, new materials with high toughness and high heat resistance are desired. Achievement of this combination of properties will open the door to many new applications, including high-temperature gas/liquid flow prototyping design and the manufacture of end-use parts.

There are some known toughening methods in the prior art, including the use of chain transfer agents, toughening additives, including polyols, long side chain or backbone functional monomers and oligomers. However, while improving the toughness, these known methods reduce heat resistance measured by HDT (Heat distortion temperature). It can be seen from the existing reports that the existing radiation-curable materials suitable for processing by additive manufacturing processes are either tough enough or heat-resistant enough, but not both. Moreover, many additives in the composition that can improve the toughness or HDT of the cured product make the existing liquid radiation-curable resins have high viscosity, that is, they have sufficient flow resistance, making it difficult for them to form a smooth and flat liquid layer on the solid layer newly formed, which on one hand leads to a prolonged processing cycle and on the other hand reduces the curing accuracy.

### SUMMARY

A main purpose of the present invention is to provide a photocurable composition, a photocurable composition for 3D printing, and use thereof, so as to solve the problem that the curable materials in the prior art cannot have both toughness and heat resistance.

In order to achieve the above purpose, according to one aspect of the present invention, there is provided a photocurable composition, which comprises, by weight:

| | |
|---|---|
| a cationically polymerizable compound | 3 to 20 parts; |
| a free-radically polymerizable compound | 10 to 70 parts; |
| a photoinitiator | 0.2 to 20 parts; |

the cationically polymerizable compound includes an oxetane polymer, which is polymerized from compounds of Formula (I) and Formula (II); 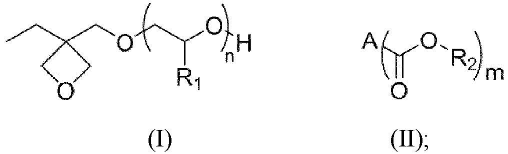 wherein each of n R₁ independently represents hydrogen, or substituted or unsubstituted C₁ to C₂₀ alkyl, and n is an integer of 1 to 20; each of m R₂ independently represents H, or C₁ to C₂₀ linear or branched alkyl; A represents any one of a connecting bond, C₁ to C₂₀ linear or branched m-valent alkyl, substituted or unsubstituted C₃ to C₂₀ m-valent cyclic alkyl, substituted or unsubstituted C₆ to C₂₀ m-valent aryl, and substituted or unsubstituted C₄ to C₂₀ m-valent heteroaryl, and the carbon atoms in the above groups are optionally replaced by carbonyl or oxygen atom and H in the above groups may be replaced by halogen, and m is an integer of 1 to 4.

In order to achieve the above purpose, according to one aspect of the present invention, there is provided a photocurable composition for 3D printing comprising a photocurable composition which is the aforementioned photocurable composition.

According to another aspect of the present invention, there is provided use of the aforementioned photocurable composition for 3D printing, and the photocurable composition for 3D printing is used for printing process, aerospace, investment casting, or medicine, and preferably the printing process includes stereolithography process and/or three-dimensional inkjet printing process.

By applying the technical solution of the present invention, the photocurable composition of the present invention has outstanding toughness, and maintains a relatively high heat resistance on this basis, and other mechanical properties can reach relatively good levels.

### DESCRIPTION OF EMBODIMENTS

It should be noted that, in the case of no conflict, the embodiments in the subject application as well as the features therein can be combined with each other. The invention will be described in detail below with reference to the embodiments.

As analyzed in the BACKGROUND, the existing radiation-curable materials suitable for processing by additive manufacturing processes are either tough enough or heat-resistant enough, but not both. Moreover, many additives in the composition that can improve the toughness or HDT of the cured product make the existing liquid radiation-curable resins have high viscosity, that is, they have sufficient flow resistance, making it difficult for them to form a smooth and flat liquid layer on the solid layer newly formed, which on one hand leads to a prolonged processing cycle and on the other hand reduces the curing accuracy. In order to solve the above problem, the present application provides a photocurable composition, a photocurable composition for 3D printing, and use thereof.

In a typical embodiment of the present invention, there is provided a photocurable composition, which comprises, by weight:

| | |
|---|---|
| a cationically polymerizable compound | 3 to 20 parts; |
| a free-radically polymerizable compound | 10 to 70 parts; |
| a photoinitiator | 0.2 to 20 parts; |

the aforementioned cationically polymerizable compound includes an oxetane polymer, which is polymerized from compounds of Formula (I) and Formula (II); 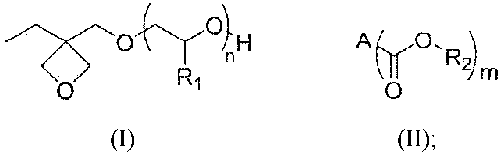 wherein each of n R₁ independently represents hydrogen, or substituted or unsubstituted C₁ to C₂₀ alkyl, and n is an integer of 1 to 20; each of m R₂ independently represents H, or C₁ to C₂₀ linear or branched alkyl; A represents any one of a connecting bond, C₁ to C₂₀ linear or branched m-valent alkyl, substituted or unsubstituted C₃ to C₂₀ m-valent cyclic alkyl, substituted or unsubstituted C₆ to C₂₀ m-valent aryl, and substituted or unsubstituted C₄ to C₂₀ m-valent heteroaryl, and the carbon atoms in the above groups are optionally replaced by carbonyl or oxygen atom and H in the above groups may be substituted by halogen, and m is an integer of 1 to 4.

After the structural unit of the oxetane polymer of the present invention is determined, it can be easily determined how to prepare this polymer. Typically, the oxetane polymer of the present invention can be obtained according to the preparation method provided in the Chinese patent application with Application No. 202110918544.6. The oxetane polymer can be used alone or in combination of two or more.

The photocurable composition of the present invention has outstanding toughness, and maintains a relatively high heat resistance on this basis, and other mechanical properties can reach relatively good levels.

In order to give full play to the advantages of the aforementioned oxetane polymer, in some embodiments, each of n R₁ independently represents hydrogen, unsubstituted C₁ to C₂₀ alkyl, or C₁ to C₂₀ alkyl substituted by halogen, preferably the C₁ to C₂₀ alkyl substituted by halogen is C₁ to C₂₀ alkyl substituted by fluorine; preferably each of n R₁ independently represents any one of hydrogen, C₁ to C₄ linear or branched alkyl, and C₁ to C₁₅ fluoroalkyl, preferably each of n R₁ independently represents any one of hydrogen, methyl, -(CH₂)ₓ-(CF₂)_{y}-CF₃, or -(CH₂)ₓ-(CF₂)_{y}-CF(CF₃)-CF₃, wherein x represents 0 or 1, and y represents any integer from 0 to 10; more preferably each of m R₂ independently represents hydrogen or methyl; preferably n is an integer of 1 to 6; preferably R₂ represents hydrogen, or C₁ to C₄ linear or branched alkyl; more preferably R₂ represents any one of hydrogen, methyl, and ethyl; preferably A represents any one of a connecting bond, C₁ to C₁₈ linear or branched m-valent alkyl, C₁ to C₅ m-valent alkyl substituted by carbonyl, C₅ to C₆ m-valent cycloalkyl, C₅ to C₆ m-valent cycloalkyl substituted by carbonyl, m-valent phenyl, m-valent phenyl substituted by fluorine, m-valent phenyl substituted by C₁ to C₄ alkoxy, m-valent phenyl substituted by C₁ to C₄ alkyl, C₂ to C₁₀ m-valent alkyl substituted by fluorine, C₂ to C₁₀ m-valent alkyl substituted by fluorine in which at least one carbon atom is replaced by oxygen atom, C₁ to C₄ m-valent alkoxy, and C₄ to C₁₀ m-valent heterocyclyl substituted by C₁ to C₄ alkyl.

Further, the compound represented by Formula (II) is any one of substituted or unsubstituted C₁ to C₂₀ monocarboxylic acid, substituted or unsubstituted C₂ to C₂₀ dicarboxylic acid, substituted or unsubstituted C₃ to C₂₀ polycarboxylic acid, substituted or unsubstituted C₁ to C₂₀ monocarboxylic ester, substituted or unsubstituted C₂ to C₂₀ dicarboxylic ester, and substituted or unsubstituted C₃ to C₂₀ polycarboxylic ester; preferably, the compound represented by Formula (II) is substituted or unsubstituted C₂ to C₁₀ dicarboxylic acid, or substituted or unsubstituted C₄ to C₁₈ dicarboxylic ester; more preferably, the compound represented by Formula (II) is any one or more selected from the following structures:

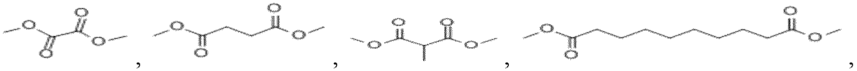

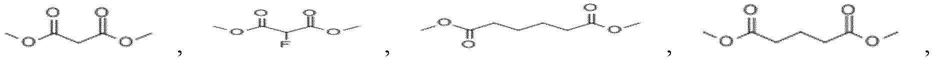

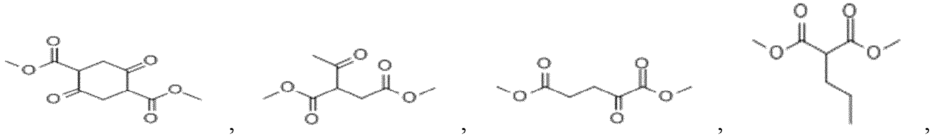

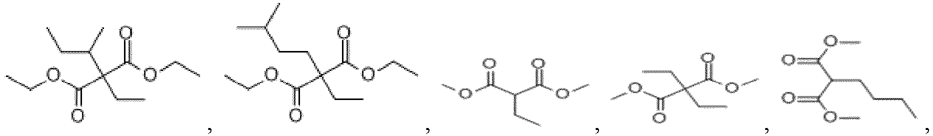

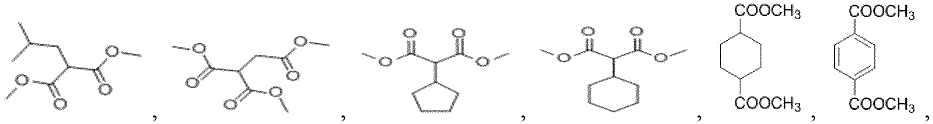

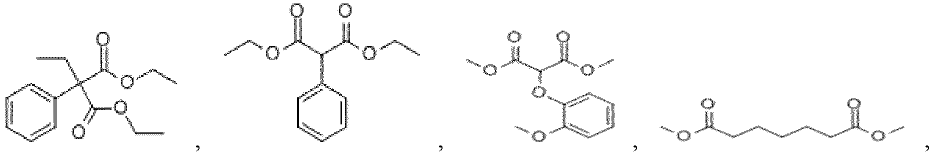

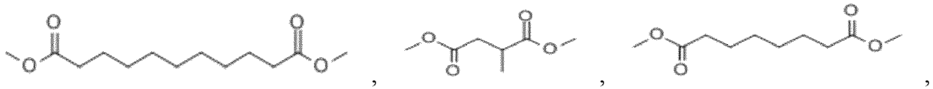

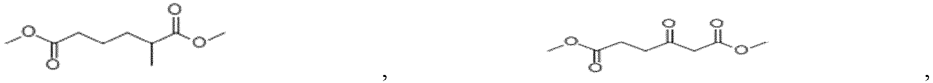

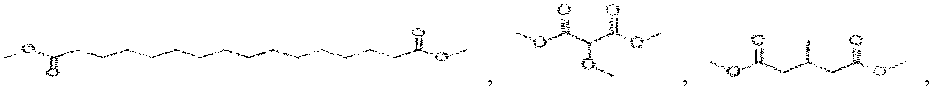

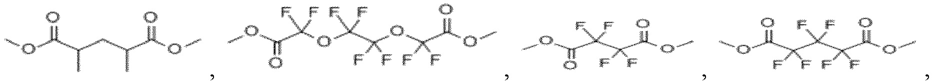

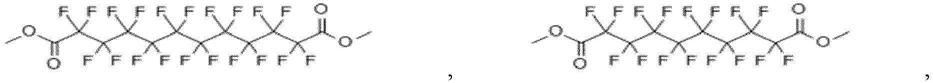

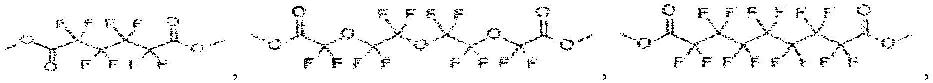

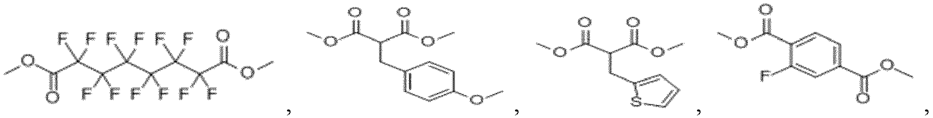

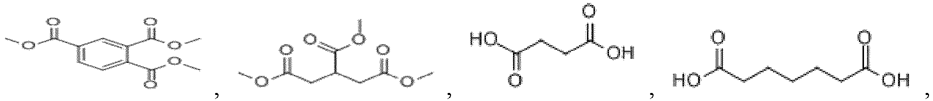

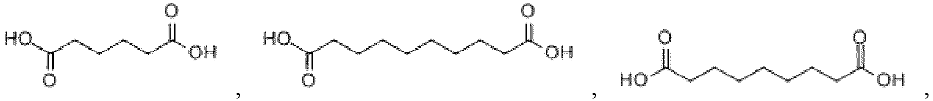

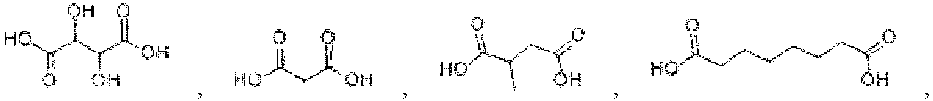

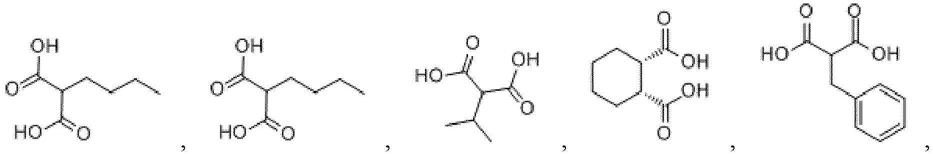

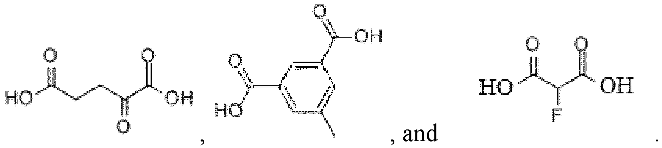

Further, the compound represented by Formula (I) is 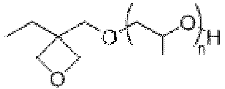 or 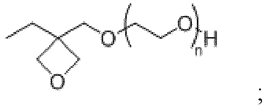 the compound represented by Formula (II)is any one of

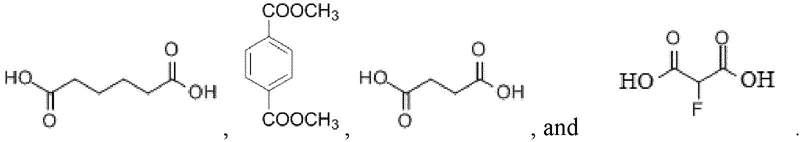

In the aforementioned photocurable composition, the cationically polymerizable compound is 3 to 20 parts by weight, preferably 5 to 15 parts by weight. If the content of the cationically polymerizable compound is too low, when the photocurable composition is used to prepare a photocurable composition for 3D printing, the toughness of the produced three-dimensional product will not be sufficiently exhibited. If the content of the cationically polymerizable compound is too high, the heat resistance of the photocurable composition will decrease.

For the cationically polymerizable compound in the aforementioned photocurable composition, the aforementioned oxetane polymer can be used alone, or other cationic polymers can also be added. In some embodiments, the aforementioned photocurable composition further comprises 27 to 70 parts by weight of a second cationically polymerizable compound. The cationically polymerizable compound is used in combination with the second cationic compound, to further improve the heat resistance and toughness of the photocurable composition.

The second cationically polymerizable compound is not particularly limited in the present invention. The second cationically polymerizable compound can be selected from at least one of cyclic ether compounds, cyclic lactone compounds, cyclic acetal compounds, cyclic thioether compounds, spirocyclic ortho-ester compounds, epoxy-functionalized compounds, and oxetane-functionalized compounds; preferably, the second cationically polymerizable compound is selected from epoxy-functionalized compounds and/or oxetane-functionalized compounds.

The aforementioned epoxy-functionalized compound as the second cationically polymerizable compound in the present invention comprises a kind of glycidyl group epoxycyclohexyl group within the molecule. The number of ethylene oxide structures in each epoxy compound molecule is one or more, preferably 2 to 15, more preferably 2 to 8. In the present invention, the use of the epoxy-functionalized compound and the oxetane-functionalized compound in combination as the second cationically polymerizable compound ca increase the photocuring rate, especially can improve the curability.

The aforementioned epoxy-functionalized compounds can include compounds containing epoxycyclohexyl and compounds containing glycidyl. The compounds containing epoxycyclohexyl show excellent cationic polymerizability. The compounds containing glycidyl provide flexibility to the polymers and can increase the mobility of the polymerization system, thereby further improving curability.

Suitable compounds containing epoxycyclohexyl include 3,4-epoxycyclohexylmethyl-3',4'-epoxycyclohexanecarboxylate, 2-(3,4-epoxycyclohexyl-5,5-spiro-3,4-epoxy)cyclohexane-m-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexanecarboxylate, methylenebis(3,4-epoxycyclohexyl)-substituted methane, di(3,4-epoxycyclohexylmethyl)ether of ethylene glycol, ethylene-bis(3,4-epoxycyclohexane)carboxylate, ε-caprolactone-modified 3,4-epoxycyclohexylmethyl-3',4'-epoxycyclohexanecarboxylate, trimethylcaprolactone-modified 3,4-epoxycyclohexylmethyl-3',4'-epoxycyclohexanecarboxylate, β-methyl-δ-valerolactone-modified 3,4-epoxycyclohexylmethyl-3',4'-epoxycyclohexylcarboxylate, and the like.

Among these compounds, compounds such as 3,4-epoxycyclohexylmethyl-3',4'-epoxycyclohexanecarboxylate, bis(3,4-epoxycyclohexylmethyl)adipate, ε-caprolactone-modified 3,4-epoxycyclohexylmethyl-3',4'-epoxycyclohexanecarboxylate,trimethylcaprolactone-modified 3,4-epoxycyclohexylmethyl-3',4'-epoxycyclohexanecarboxylate, and β-methyl-δ-valerolactone-modified 3,4-epoxycyclohexylmethyl-3',4'-epoxycyclohexanecarboxylate are preferred. 3,4-epoxycyclohexylmethyl-3',4'-epoxycyclohexanecarboxylate, and bis(3,4-epoxycyclohexylmethyl)adipate are more preferred.

Compounds having similar structures to those described above are also commercially available, for example: UVR-6100, UVR-6105, UVR-6110, UVR-6128, UVR-6200, and UVR-6216 (produced by Union Carbide Corporation), Celoxide2021, Celoxide2021P, Celoxide2081, Celoxide2083, Celoxide2085, EpoleadGT-300, EpoleadGT-301, EpoleadGT-302, EpoleadGT-400, EpoleadGT-401, and EpoleadGT-403 (produced by Daicel Chemical Industries Co., Ltd.), KRM-2100, KRM-2110, and KRM-2199 (produced by Asahi Denka Kogyo Co., Ltd.), and the like. These compounds can be used alone or in combination of two or more.

The aforementioned compounds containing glycidyl include: bisphenol-A diglycidyl ether, bisphenol-F diglycidyl ether, bisphenol-S diglycidyl ether, brominated bisphenol-A diglycidyl ether, brominated bisphenol-F diglycidyl ether, brominated bisphenol-S diglycidyl ether, hydrogenated bisphenol-A diglycidyl ether, hydrogenated bisphenol-F diglycidyl ether, hydrogenated bisphenol-S diglycidyl ether, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, etc.; polyether polyol polyglycidyl ether wherein the polyether polyol is obtained by adding one or more oxyalkylenes to aliphatic polyol such as ethylene glycol, propylene glycol, glycerol or the like; aliphatic long-chain diacid diglycidyl ester; aliphatic higher alcohol monodiglycidyl ether; monodiglycidyl ether of phenol, cresol, butylphenol, or polyether alcohol obtained by adding oxyalkylene thereto; higher fatty acid glycidyl ester; and the like.

Among these compounds, compounds such as bisphenol-A diglycidyl ether, bisphenol-F diglycidyl ether, hydrogenated bisphenol-A diglycidyl ether, hydrogenated bisphenol-F diglycidyl ether, 1,4-butanediol diglycidyl ether, 1,6-hexanediol diglycidyl ether, glycerol triglycidyl ether, trimethylolpropanetriglycidyl ether, neopentyl glycol diglycidyl ether, polyethylene glycol diglycidyl ether, and polypropylene glycol diglycidyl ether are preferred.

The aforementioned compounds containing glycidyl are commercially available, for example: UVR-6216 (produced by Union Carbide Corporation), Glycidole, AOEX24, and CyclomerA200 (produced by Daicel Chemical Industries Co., Ltd.), Epicoat828, Epicoat812, Epicoat1031, Epicoat872, and EpicoatCT508 (produced by Yuka-Shell K.K Corporation), KRM-2400, KRM-2410, KRM-2408, KRM-2490, KRM-2720, and KRM-2750 (produced by Asahi Denka Kogyo Co., Ltd.), and the like. These compounds can be used alone or in combination of two or more.

The aforementioned oxetane-functionalized compounds include: 3-ethyl-3-hydroxymethyloxetane, 3-(methyl)allyloxymethyl-3-ethyloxetane, (3-ethyl-3-oxetanylmethoxy)toluene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl]phenylether, isobutoxymethyl(3-ethyl-3-oxetanylmethyl)ether, isobornyloxyethyl(3-ethyl-3-oxetanylmethyl)ether, isobornyl(3-ethyl-3-oxetanylmethyl)ether, 2-ethylhexyl(3-ethyl-3-oxetanylmethyl)ether, ethyldiglycol(3-ethyl-3-oxetanylmethyl)ether, dicyclopentadienyl(3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofuranyl(3-ethyl-3-oxetanylmethyl)ether, tetrabromophenyl(3-ethyl-3-oxetanylmethyl)ether, 2-tetrabromophenoxyethyl(3-ethyl-3-oxetanylmethyl)ether, tribromophenyl(3-ethyl-3-oxetanylmethyl)ether, 2-tribromophenoxyethyl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, butoxyethyl(3-ethyl-3-oxetanylmethyl)ether, pentachlorophenyl(3-ethyl-3-oxetanylmethyl)ether, pentabromophenyl(3-ethyl-3-oxetanylmethyl)ether, bornyl(3-ethyl-3-oxetanylmethyl)ether, 3,7-bis(3-oxetanyl)-5-oxa-nonane, 3,3'-(1,3-(2-methylene)propylenediylbis(oxymethylene)bis(3-ethyloxetanyl), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis[(3-ethyl-3-oxetanylmethyl)methyl]ether, dicyclopentenylbis(3-ethyl-3-oxetanylmethyl)ether, triethylene glycol bis(3-ethyl-3-oxetanylmethyl)ether, tetraethylene glycol bis(3-ethyl-3-oxetanylmethyl)ether, tricyclodecanediyldimethylene(3-ethyl-3-oxetanylmethyl)ether, trimethylolpropanetris(3-ethyl-3-oxetanylmethyl)ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl)ether, pentaerythritol tetra(3-ethyl-3-oxetanylmethyl)ether, polyethylene glycol bis(3-ethyl-3-oxetanylmethyl)ether, dipentaerythritol hexa(3-ethyl-3-oxetanylmethyl)ether, dipentaerythritol penta(3-ethyl-3-oxetanylmethyl)ether, dipentaerythritol tetra(3-ethyl-3-oxetanylmethyl)ether, caprolactone-modified dipentaerythritol hexa(3-ethyl-3-oxetanylmethyl)ether, caprolactone-modified dipentaerythritol penta(3-ethyl-3-oxetanylmethyl)ether, ditrimethylolpropane tetra(3-ethyl-3-oxetanylmethyl)ether, ethylene oxide-modified bisphenol-A bis(3-ethyl-3-oxetanylmethyl)ether, propylene oxide-modified bisphenol-A bis(3-ethyl-3-oxetanylmethyl)ether, ethylene oxide-modified hydrogenated bisphenol-A bis(3-ethyl-3-oxetanylmethyl)ether, propylene oxide-modified hydrogenated bisphenol-A bis(3-ethyl-3-oxetanylmethyl)ether, ethylene oxide-modified bisphenol-F bis(3-ethyl-3-oxetanylmethyl)ether, and the like. These compounds can be used alone or in combination of two or more.

Among these compounds, the compounds with 1 to 10, preferably 1 to 4, more preferably two oxetane functionalizations are suitable as the second cationically polymerizable compound of the photocurable composition of the present invention. Examples of the most suitable oxetane-functionalized compounds are 3-ethyl-3-hydroxymethyloxetane, (3-ethyl-oxetanylmethoxy)toluene, 1,4-bis[(3-ethyl-3-oxetanylmethoxy)methyl]benzene, 1,2-bis[(3-ethyl-3-oxetanylmethoxy)]ethane, trimethylolpropane tris(3-ethyl-3-oxetanylmethyl)ether, and 3-ethyl-3-oxetanylmethoxybenzene. These compounds can be used alone or in combination of two or more.

The oxetane-functionalized compounds having similar structures to those described above are commercially available, for example: TR-TCM101, TR-TCM102, TR-TCM104, TR-TCM109, TR-TCM121, TR-TCM201, TR-TCM207, TR-TCM218, and TR-TCM245 (produced by CHANGZHOU TRONLY NEW ELECTRONIC MATERIALS CO., LTD.), and the like.

In order to increase the photocuring rate, especially to improve the curability, preferably, the aforementioned second cationically polymerizable compound is a combination of epoxy-functionalized compound and oxetane-functionalized compound, more preferably, the aforementioned second cationically polymerizable compound is 27 to 70 parts by weight, more preferably 50 to 70 parts by weight.

In addition to the one or more cationically polymerizable compound and the second cationically polymerizable compound described as above, the photocurable composition of the present invention further comprises one or more free-radically polymerizable compounds. The free-radically polymerizable compound used in the present invention is not particularly limited, including: monofunctional ethylenically unsaturated compounds and multifunctional ethylenically unsaturated compounds. For example, one or more free-radically polymerizable compounds containing one or more ethylenically unsaturated groups are e.g., (meth)acrylate (i.e., acrylate and/or methacrylate) functionalized components.

Examples of the monofunctional ethylenically unsaturated compoundsof the present invention include: acrylamide, N,N-dimethylacrylamide, (meth)acryloylmorpholine, 7-amino-3,7-dimethyloctyl (meth)acrylate, isobutoxymethyl(meth)acrylamide, isobornyloxyethyl (meth)acrylate, isobornyl (meth)acrylate, 2-ethylhexyl (meth)acrylate, ethyldiethylene glycol (meth)acrylate, tert-octyl(meth)acrylamide, diacetone (meth)acrylamide, dimethylaminoethyl (meth)acrylate, diethylaminoethyl (meth)acrylate, lauryl (meth)acrylate, dicyclopentadienyl (meth)acrylate, dicyclopentenyloxyethyl (meth)acrylate, dicyclopentenyl (meth)acrylate, N,N-dimethyl(meth)acrylamide, tetrachlorophenyl (meth)acrylate, 2-tetrachlorophenoxyethyl (meth)acrylate, tetrahydrofurfuryl (meth)acrylate, tetrabromophenyl (meth)acrylate, 2-tetrabromophenoxyethyl (meth)acrylate, 2-trichlorophenoxyethyl (meth)acrylate, tribromophenyl (meth)acrylate, 2-tribromophenoxyethyl (meth)acrylate, 2-hydroxyethyl (meth)acrylate, 2-hydroxypropyl (meth)acrylate, vinyl caprolactam, N-vinylpyrrolidone, phenoxyethyl (meth)acrylate, butoxyethyl (meth)acrylate, pentachlorophenyl (meth)acrylate, pentabromophenyl (meth)acrylate, polyethylene glycol mono(meth)acrylate, polypropylene glycol mono(meth)acrylate, bornyl (meth)acrylate, and methyltridiglycol (meth)acrylate.

Examples of the multifunctional ethylenically unsaturated compounds include: ethylene glycol di(meth)acrylate, dicyclopentenyl di(meth)acrylate, triethylene glycol diacrylate, tetraethylene glycol di(meth)acrylate, tricyclodecanediyldimethylene di(meth)acrylate, trimethylolpropane tri(meth)acrylate, ethoxylated trimethylolpropane tri(meth)acrylate, propoxylated trimethylolpropane tri(meth)acrylate, tripropylene glycol di(meth)acrylate, neopentyl glycol di(meth)acrylate, dual-terminated (meth)acrylic adduct of bisphenol-A diglycidyl ether, 1,4-butanediol di(meth)acrylate, 1,6-hexanediol di(meth)acrylate, polyethylene glycol di(meth)acrylate, pentaerythritol derivatives with (meth)acrylate functionalization (e.g., pentaerythritol tri(meth)acrylate, pentaerythritol tetra(meth)acrylate, dipentaerythritol hexa(meth)acrylate, dipentaerythritol penta(meth)acrylate, or dipentaerythritol tetra(meth)acrylate), di(trimethylolpropane) tetra(meth)acrylate, ethoxylated bisphenol-A di(meth)acrylate, propoxylated bisphenol-A di(meth)acrylate, ethoxylated hydrogenated bisphenol-A di(meth)acrylate, propoxylate-modified hydrogenated bisphenol-A di(meth)acrylate, and ethoxylated bisphenol-F di(meth)acrylate.

In some embodiments, the photocurable composition of the present invention includes one or more compounds containing at least 3 (meth)acrylate groups (e.g., 3 to 6 (meth)acrylate groups or 5 to 6 (meth)acrylate groups).

The proportion of the aforementioned free-radically polymerizable compound in the aforementioned photocurable composition of the present invention is generally no more than 50 parts, more preferably less than 40 parts, and further preferably less than 30 parts.

The photoinitiator is not particularly limited in the present invention. The photoinitiator includes a cationic photoinitiator and a free radical photoinitiator. Preferably, the cationic photoinitiator is 0.1 to 10 parts by weight. Preferably, the free radical photoinitiator is 0.1 to 10 parts by weight.

Under consideration of comprehensive factors such as costs and effects of using with other components of the photocurable composition (such as photoinitiation efficiency, curing speed, etc.), the cationic photoinitiator is preferably selected from one or a combination of two or more of an iodonium salt, a sulfonium salt, and an arylferrocenium salt. More preferably, the iodonium salt has a structure of Formula (III) below, and the sulfonium salt has a structure of Formula (IV) below: 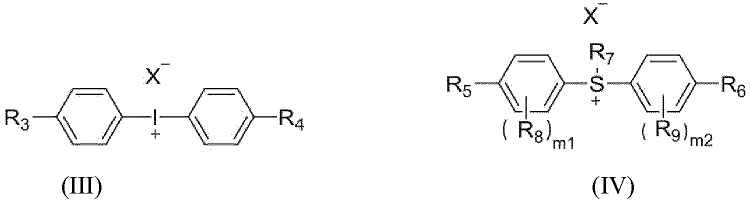 wherein R₃, R₄, R₅, and R₆ each independently represent hydrogen, C₁ to C₂₀ linear or branched alkyl, C₄ to C₂₀ cycloalkylalkyl or alkylcycloalkyl, and the non-cyclic -CH₂- in these groups may be optionally substituted by -O-, -S-, or 1,4-phenylene; R₇ represents substituted or unsubstituted C₆ to C₂₀ aryl, substituted or unsubstituted C₆ to C₂₀ alkylaryl, C₁ to C₂₀ linear or branched alkyl, C₄ to C₂₀ cycloalkylalkyl or alkylcycloalkyl, substituted or unsubstituted thiophenylphenyl, and the non-cyclic -CH₂- in these groups may be optionally substituted by carbonyl, -O-, -S-, or 1,4-phenylene; R₈ and R₉ each independently represent any one of alkyl, hydroxy, alkoxy, alkylcarbonyl, arylcarbonyl, alkoxycarbonyl, aryloxycarbonyl, arylthiocarbonyl, acyloxy, arylthio, aryl, heterocyclic hydrocarbyl, aryloxy, alkylsulfinyl, arylsulfinyl, alkylsulfonyl, arylsulfonyl, hydroxy(poly)alkyleneoxy, substitutable amino, cyano, nitro, or halogen atom; m1 and m2 respectively represent the number of R₈ and R₉, and m1 and m2 each independently represent 0, 1, 2, 3, or 4; X⁻ each independently represent M⁻, ClO₄⁻, CN⁻, HSO₄⁻, NO₃⁻, CF₃COO⁻, (BM₄)⁻, (SbM₆)⁻, (AsM₆)⁻, (PM₆)⁻, Al[OC(CF₃)₃]₄⁻, sulfonate ion, B(C₆M₅)₄⁻, or [(Rf)_{b}PF_{6-b}]⁻, where M is halogen, Rf each independently represents alkyl in which ≥80% of hydrogen atoms are substituted by fluorine atoms, and b represents an integer of 1 to 5.

As a preferred structure, in the compounds represented by Formulae (III) and (IV): R₃ and R₄ each independently represent hydrogen, C₁ to C₁₂ linear or branched alkyl, C₄ to C₁₀ cycloalkylalkyl or alkylcycloalkyl, and the non-cyclic -CH₂- in these groups may be optionally substituted by -O-; R₅ and R₆ each independently represent hydrogen, C₁ to C₁₀ linear or branched alkyl, C₄ to C₁₀ cycloalkylalkyl or alkylcycloalkyl, substituted or unsubstituted C₆ to C₁₂ aryl, and the non-cyclic -CH₂- in these groups may be optionally substituted by -O-, -S-, or 1,4-phenylene; R₇ represents substituted or unsubstituted C₆ to C₁₀ aryl, substituted or unsubstituted C₆ to C₁₀ alkylaryl, substituted or unsubstituted thiophenylphenyl, and the non-cyclic -CH₂- in these groups may be optionally substituted by carbonyl, -O-, -S-, or 1,4-phenylene; R₈ and R₉ represent C₁ to C₁₀ linear or branched alkyl, C₁ to C₁₀ linear or branched alkoxy, C₁ to C₁₀ alkylcarbonyl, and halogen.

Further preferably, the cationic portion of the aforementioned iodonium salt and sulfonium salt photoinitiators can be listed as follows:

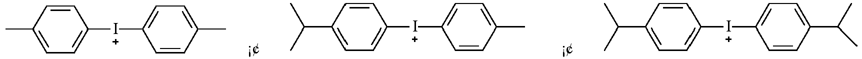

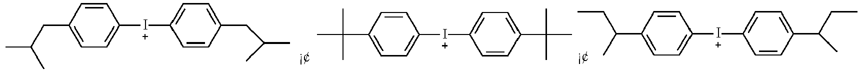

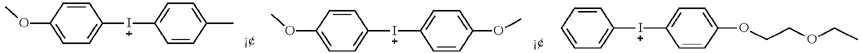

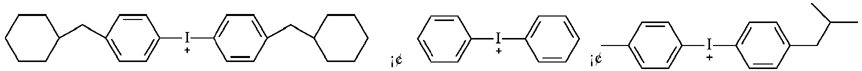

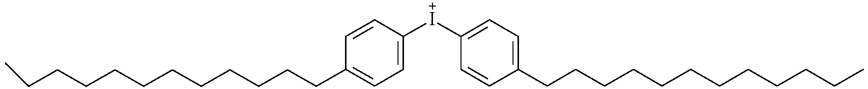

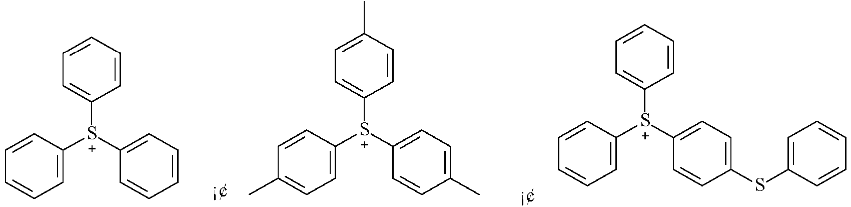

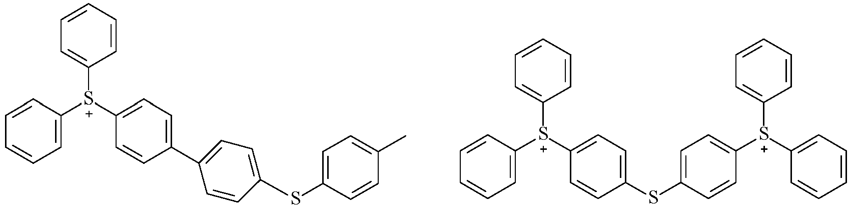

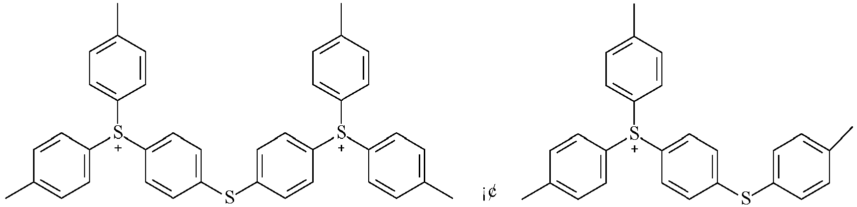

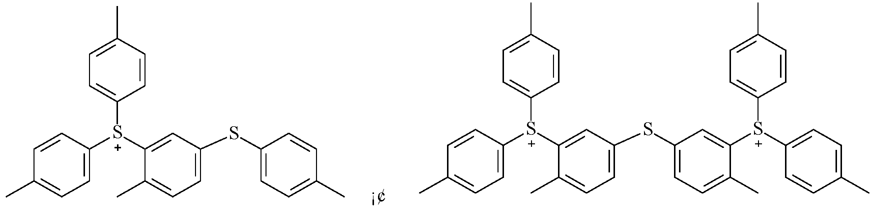

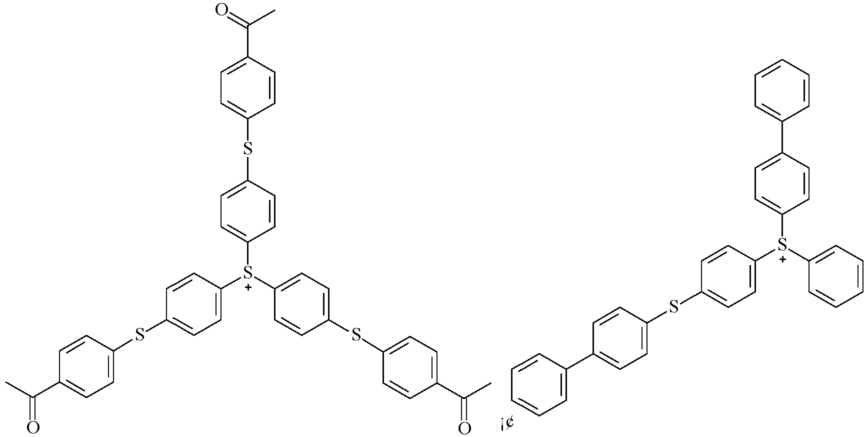

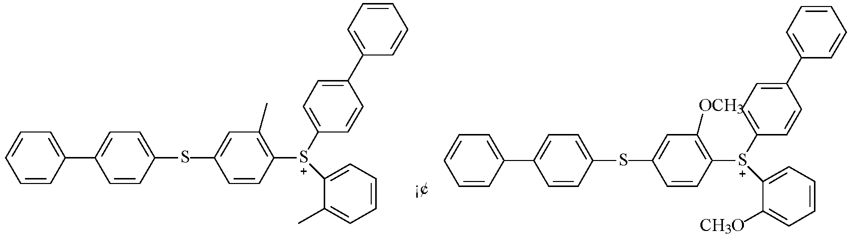

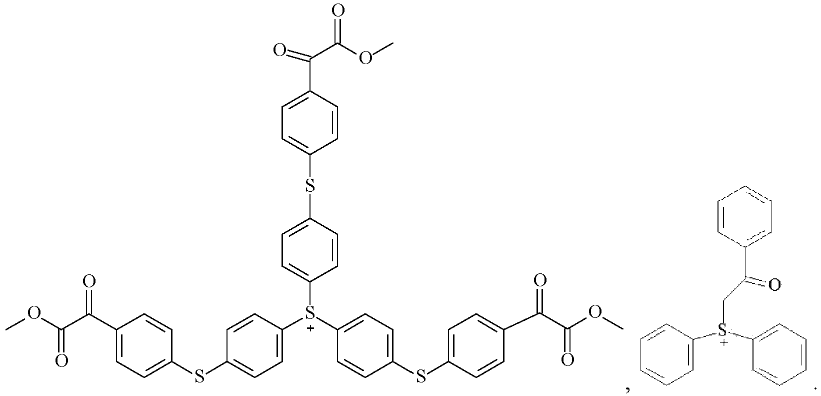

Further preferably, the anionic portion of the aforementioned iodonium salt and sulfonium salt photoinitiators can be: Cl⁻, Br⁻, PF₆⁻, SbF₆⁻, AsF₆⁻, BF₄⁻, C4F₉SO₃⁻, B(C₆H₅)₄⁻, C₈F₁₇SO₃⁻, CF₃SO₃⁻, Al[OC(CF₃)₃]₄⁻, (CF₃CF₂)₂PF₄⁻, (CF₃CF₂)₃PF₃⁻, [(CF₃)₂CF₂]₂PF₄⁻, [(CF₃)₂CF₂]₃PF₃⁻, [(CF₃)₂CFCF₂]₂PF₄⁻, or (CF₃)₂CFCF₂]₃PF₃⁻.

Commercially available cationic photoinitiators having similar structures, for example (but not limited to): PAG20001, PAG20002, PAG30201, PAG30101, and the like produced by CHANGZHOU TRONLY NEW ELECTRONIC MATERIALS CO., LTD., and Irgacure250 and the like produced by BASF, Germany, can also be used in the photocurable composition of the present invention.

The photocurable composition of the present invention contains at least one cationic photoinitiator, with a content of 0.1 to 10 parts and more preferably 0.5 to 5 parts based on the total weight of the photocurable composition. The amount of the sensitizer is 0 to 5 parts, more preferably 0 to 3 parts.

One or more free radical photoinitiators may be used in the photocurable composition of the present invention. The free radical photoinitiator may include: benzophenones (e.g., benzophenone, benzophenone substituted by alkyl, or benzophenone substituted by alkoxy); benzoins, e.g., benzoin, benzoin ether (benzoin methyl ether, benzoin ethyl ether, benzoin isopropyl ether, benzoin phenyl ether), and benzoin acetate; acetophenones, e.g., acetophenone, 2,2-dimethoxyacetophenone, 4-(thiophenyl)acetophenone, and 1,1-dichloroacetophenone; benzil, benzil ketal (e.g., benzil dimethyl ketal and benzil diethyl ketal); anthraquinones, e.g., 2-methylanthraquinone, 2-ethylanthraquinone, 2-tert-butylanthraquinone, 1-chloroanthraquinone, and 2-pentylanthraquinone; triphenylphosphine; benzoyl phosphine oxides, e.g., 2,4,6-trimethylbenzoyldiphenylphosphine oxide; thioxanthones and xanthones, acridine derivatives, phenazine derivatives, quinoline derivatives, or 1-phenyl-1,2-propanedione-2-O-benzoyl oxime, 1-aminophenylketones or 1-hydroxyphenylketones, e.g., 1-hydroxycyclohexylphenylketone, phenyl (1-hydroxyisopropyl) ketone, and 4-isopropylphenyl (1-hydroxyisopropyl) ketone, or triazine compounds, e.g., 4‴-methylthiophenyl-1-di(trichloromethyl)-3,5-S-triazine, S-triazine-2-(diphenyl ethylene)-4,6-bis(dichloromethyl) and p-methoxystyryltriazine.

Other suitable free radical photoinitiators include ionic dye-counter ion compounds capable of absorbing actinic radiation and generating free radicals that initiate the polymerization of acrylates, such as those free radical photoinitiators described in U.S. Patent Applications having Publication Nos. 4,751,102, 4,772,530, and 4,772,541, which are incorporated herein in their entirety, as supplement and reference.

The photocurable composition of the present invention contains at least one free radical photoinitiator, with a content of 0.1 to 10 parts and more preferably 0.5 to 5 parts based on the total weight of the photocurable composition.

In addition, in order to improve photoefficiency or match a light source of a specific wavelength, a sensitizer may also be added. Suitable sensitizers may be anthracene, coumarin, or pyrazoline sensitizers. Specifically, preferred sensitizers may be anthracene sensitizers described in Chinese invention patent applications with Application Nos. 201510355839.1, 201510355364.6, and 201510353754.X, which are incorporated herein in their entirety, as supplement and reference.

The photocurable composition further comprises a stabilizer. Preferably, the photocurable composition further comprises a toughener. Preferably, the photocurable composition further comprises an additive. More preferably, the additive includes one or more of organic and inorganic fillers, dyes, pigments, antioxidants, wetting agents, defoamers, chain transfer agents, thickeners, leveling agents, defoamers, ultraviolet absorbers, and surfactants.

A stabilizer is generally added to the photocurable composition. The stabilizers that can prevent viscosity from increase during use include butylated hydroxytoluene ("BHT"), 2,6-di-tert-butyl-4-hydroxytoluene, hindered amines such as benzyldimethylamine ("BDMA") and N,N-dimethylbenzylamine, and boron complexes. If a stabilizer is used in the photocurable composition, the stabilizer may be about 0.001 to 5 parts by weight based on the total weight of the aforementioned photocurable composition.

A toughener is added to the photocurable composition, and this toughener may be a reactive and/or non-reactive core-shell type. For example, reactive particles having a crosslinked elastomer core and a shell containing reactive groups are included. The core of the reactive particles can be composed of polysiloxane, polybutadiene, polybutadiene-co-styrene, amine-terminated polybutadiene, methacrylated polybutadiene, alkyl acrylate, polyorganosiloxane, rubber, poly(ethylene glycol)-modified urethane acrylate, polyurethane acrylate polycarbonate, PTFE, or other elastomeric materials. In one embodiment, the crosslinked core is composed of polysiloxane. In another embodiment, the polysiloxane core is a crosslinked polyorganosiloxane, which can include dialkylsiloxane repeating units, wherein the alkyl is C₁ to C₆ alkyl. In another embodiment, the polysiloxane core includes dimethylsiloxane repeating units. The shell containing reactive groups can be composed of poly(styrene-co-acrylonitrile), poly(acrylonitrile), poly(carboxyl-functionalized PMMA-co-styrene), polystyrene-co-butyl acrylate, polystyrene, poly(methyl methacrylate-co-maleic anhydride), poly(alkyl methacrylate), poly(styrene-co-acrylonitrile), polystyrene, poly(methyl methacrylate-co-styrene), poly(styrene-co-acrylonitrile), modified vinyl ester, epoxide, PMMA, polyglycidyl methacrylate-co-acrylonitrile, poly(cyclohexanedimethyl terephthalate), thermoplastic resin such as polycarbonate, poly(methyl methacrylate-co-glycidyl methacrylate), and poly(methyl methacrylate-co-acrylonitrile-co-divinylbenzene). The reactive groups of the shell may be an epoxy group, an oxetane group, an ethylenically unsaturated group, and/or a hydroxyl group. In one embodiment, the reactive groups may be ethylene oxide, glycidyl, vinyl ester, vinyl ether, acrylate group, and mixtures thereof. The average particle size of the reactive particles is preferably 0.01 to 50µm, more preferably 0.1 to 5µm, and even more preferably about 0.1 to 3µm.

Examples of commercially available reactive particles include: Albidur EP 2240, silicone-epoxide particles in bisphenol-A epoxy resin; Albidur VE 3320, silicone-vinyl ester particles in bisphenol vinyl ester; and Albidur EP 5340, silicone-epoxide particles in cycloaliphatic epoxy resin (all available from Hanse Chemie). In one embodiment, the reactive particles are added as a mixture of reactive particles and a reactive liquid medium containing, for example, epoxide or ethylenically unsaturated groups to the photocurable composition. For example, for Albidur EP 2240, the reactive organosiloxane particles are dispersed in bisphenol-A glycidyl ether; for Albidur VE 3320, the particles are dispersed in bisphenol-A vinyl ester; and for Albidur EP 5340, the particles are dispersed in cycloaliphatic epoxide. The amount of reactive particles added to the photocurable composition can vary depending on the cationically polymerizable compound and the free-radically polymerizable compound. When a toughener is present, the toughener may be at least 0.5 parts by weight, more preferably at least about 1 parts by weight, and even more preferably at least about 1.5 parts by weight, based on the total weight of the photocurable composition. In another embodiment, the reactive particles are present in an amount of 40 parts or less, more preferably 15 parts or less, and further preferably 10 parts or less, based on the total weight of the photocurable composition. In another embodiment, the reactive particles are present in an amount ranging from 0.01 to 40 parts, preferably 0.5 to 15 parts, and more preferably 1 to 5 parts, based on the total weight of the photocurable composition.

In addition to the aforementioned toughener, the toughener may also include one or more hydroxyl-containing compounds. The hydroxyl-containing compound has a functionality of at least 1 and more preferably at least 2, without any group inhibiting the curing reaction. The hydroxyl-containing compound may be an aliphatic or aromatic hydroxyl-containing compound. Examples include polyether polyols, polyester polyols, hydroxy and hydroxy/epoxy functionalized polybutadiene, 1,4-cyclohexanedimethanol, polycaprolactone diols and triols, ethylene/butylene polyols, and monohydroxyl functional monomers. In one embodiment, the hydroxyl-containing compound is polytetramethylene ether glycol ("polyTHF"). The polyTHF preferably has a molecular weight of 250 to 2500, and may be terminated with hydroxy, epoxy, or ethylenically unsaturated group. Commercially available polyTHF includes Polymeg 1000, which is a linear diol with a nominal molecular weight of 1000. In another embodiment, the hydroxyl functional compound is a caprolactone-based oligo- or polyester, for example, trimethylolpropane-triester with caprolactone, such as Tone 301. In another embodiment, the hydroxyl functional compound is a polyester, such as k-flex 188. When the aforementioned toughener is present, the total amount of the hydroxyl functional compound in the toughener may generally be 0.01 to 40 parts and preferably 0.5 to 20 parts, based on the total weight of the aforementioned photocurable composition.

Additives that may also be added to the aforementioned photocurable composition include organic and inorganic fillers, dyes, pigments, antioxidants, wetting agents, defoamers, chain transfer agents, thickeners, leveling agents, defoamers, ultraviolet absorbers, surfactants, nanofillers with an average particle size of 3 to 50nm, etc. Such additives are generally well-known to those skilled in the art and can be used according to the requirement of a specific application.

In addition to the aforementioned additives, fillers may also be added to the aforementioned photocurable composition, including inorganic or organic, powdery, flaky or fibrous materials. Examples of inorganic fillers include: mica, glass or silica, calcium carbonate, barium sulfate, talc, glass or silica foam, zirconium silicate, iron oxide, glass fiber, asbestos, diatomaceous earth, dolomite, powdered metal, titanium oxide, pulp powder, kaolin, modified kaolin, hydrated kaolin metal fillers, ceramics, and composite materials. Examples of organic fillers include: polymeric compounds, thermoplastics, core-shell, aromatic polyamides, Kevlar, nylon, crosslinked polystyrene, crosslinked poly(methyl methacrylate), polystyrene or polypropylene, crosslinked polyethylene powder, crosslinked phenolic resin powder, crosslinked urea resin powder, crosslinked melamine resin powder, crosslinked polyester resin powder, and crosslinked epoxy resin powder. Optionally, both inorganic and organic fillers can be surface treated with various compounds-coupling agents. Examples include methacryloylpropyltrimethoxysilane, β-(3,4-epoxycyclohexyl)ethyltrimethoxysilane, γ-glycidylpropyltrimethoxysilane, and methyltriethoxysilane. Mixtures of inorganic and organic fillers may also be used. Other examples of preferred fillers are microcrystalline silica, crystalline silica, amorphous silica, alkaline aluminum silicate, feldspar, aluminum oxide, aluminum hydroxide, glass powder, alumina trihydrate, surface-treated alumina trihydrate, and aluminum silicate. Each of the preferred fillers is commercially available. The most preferred fillers are inorganic fillers such as silica, Imsil, Novasite, amorphous silica, feldspar, and alumina trihydrate. These fillers are preferably transparent to UV light, have a low tendency to refract or reflect the incident light, and provide good dimensional stability and heat resistance. Nanofillers such as exfoliated clays (nanoclays), nanosilica, aluminum borate whiskers, nanobarium sulfate, silica nanoparticles dispersed in a UV-curable monomer, aluminum oxide nanoparticles dispersed in a UV-curable monomer may also be used.

When the photocurable composition of the present invention is applied to stereolithography, the fillers and nanofillers used in the photocurable composition must also meet the requirement that they do not hinder cationic or free radical polymerization, and the filled composition has a relatively low viscosity suitable for stereolithography. The fillers and nanofillers can be used alone or as a mixture of two or more fillers, depending on the desired performances. The fillers and nanofillers used in the present invention can be neutral, acidic or alkaline, with weak alkaline being preferred. It can vary between 50nm and 50µm. The nanofiller particle size can vary between 3 and 500nm. Dispersants can be used to ensure good dispersion of these nanofillers.

If fillers are used in the aforementioned photocurable composition, the content of the fillers can generally be 0.5 to 30 parts, based on the total weight of the photocurable composition. The photocurable composition of the present invention can be prepared by known methods, for example, by premixing the individual components and then mixing the premixes, or by mixing all the compounds together using a conventional equipment such as stirring tank. In one embodiment, the aforementioned components may be mixed at a slightly elevated temperature ranging from about 30°C to about 60°C in the absence of light and under the condition of yellow light room. In addition, the prepared photocurable composition has a viscosity at 25°C in the range of 50 to 1000cps, more preferably 70 to 700cps.

The aforementioned photocurable composition can be polymerized by optical radiation, for example by means of electron beams, X-rays, UV or VIS light, preferably by radiation in the wavelength range of 280 to 650nm. Particularly suitable ones are HeCd, argon ion or nitrogen laser beams, as well as metal vapor and NdYAG lasers. The present invention runs throughout various types of existing or developing lasers, such as solid-state, argon ion lasers, etc., as well as radiation that is not based on lasers. Those skilled in the art acknowledge that, for each selected light source, an appropriate photoinitiator and a suitable sensitizer must be selected.

In another typical embodiment of the present invention, there is provided a photocurable composition for 3D printing comprising a photocurable composition which is the aforementioned photocurable composition.

The photocurable composition for 3D printing comprising the aforementioned photocurable composition has excellent toughness and maintains a relatively high heat resistance on this basis.

In another typical embodiment of the present invention, there is provided use of the aforementioned photocurable composition for 3D printing, the photocurable composition for 3D printing being used for printing process, aerospace, investment casting, or medicine, and preferably the printing process includes stereolithography process and/or three-dimensional inkjet printing process.

One aspect of the present invention also includes a method for preparing a photocured composition for 3D printing in continuous cross-sectional layers based on a product model, by forming a first layer of the photocurable composition; exposing the first layer to actinic radiation having a pattern corresponding to each cross-sectional layer of the model and being sufficient to harden the first layer in an imaging area; forming a second layer of the photocurable composition on the hardened first layer; exposing the second layer to actinic radiation having a pattern corresponding to each cross-sectional layer of the model and being sufficient to harden the second layer in the imaging area; and repeating the aforementioned two steps to form the desired continuous layers, thereby forming the photocured composition for 3D printing useful in various applications such as aerospace industry and investment casting, or medical applications.

Although the photocurable composition of the present invention is preferably used in the stereolithography process, it can also be used in three-dimensional inkjet printing or other rapid prototyping techniques to produce a photocurable composition for 3D printing.

In the inkjet printing, the continuous droplets of the photocurable composition (e.g., using an inkjet print head such as a piezoelectric inkjet print head) are applied to a substrate at a target location, and radiated by exposing the liquid to electromagnetic radiation, thereby causing the composition to cure and form a photocured composition for 3D printing of a desired shape. The droplets are deposited according to the desired shape stored in a computer folder (e.g., a CAD folder). The substrate may include paper, fabric, tile, printing plate, wallpaper, plastic, or paste. The photocurable composition may be radiated pixel by pixel, row by row, or layer by layer after several layers have been formed, and/or after all layers have been formed. The electromagnetic radiation used may be UV light, microwave radiation, visible light, laser beam, or other similar sources.

Alternatively, the photocurable composition of the present invention may be deposited on powders. The powders can be spread as a thin layer on a substrate and the photocurable composition can be spray-deposited in a desired pattern on the powders at a desired position. The pattern can then be cured by exposing the photocurable composition to UV light. Another layer of powders is then placed on top of the first layer and the process is repeated to form the photocured composition for 3D printing. Any uncured powders can be removed after forming the photocured composition for 3D printing. After removing the uncured powders, final heat and/or radiation cure can be provided to obtain the photocured composition for 3D printing. The photocurable composition is thereby completely accumulated with the powders.

Other applications in which the photocurable composition of the present invention may be used include the ones as adhesives, as coatings (for example, photoimageable coatings such as photoresists, or coatings for optical fibers), as encapsulants for light emitting diodes, or in paints, inks or varnishes, or any other applications, processes or methods, in which a shelf-stable photocurable composition having stable mechanical properties when cured is desired.

Hereinafter, the present invention will be further described in detail with reference to specific examples, which cannot be understood as a limitation to the protection scope of the present invention.

The samples were prepared according to the proportions of the components in Table 1. In the following examples, all parts were parts by weight. The photocurable compositions described in the examples were prepared by mixing the components, stirring with a stirrer at 20 to 80°C (depending on the viscosity) in a yellow light room until uniform compositions were obtained. Most formulations were stirred at room temperature of 25 to 30°C to form uniform compositions.

**Table 1**

| Component | Ex. 1 | Ex. 2 | Ex. 3 | Ex. 4 | Ex. 5 | Ex. 6 | Ex. 7 | Ex. 8 | Ex. 9 | Ex. 10 | Com. Ex. 1 | Com. Ex. 2 | Com. Ex. 3 | Com. Ex. 4 |
|---|---|---|---|---|---|---|---|---|---|---|---|---|---|---|
| Comp. 1 | 5 | | | | | | 7 | 15 | | | | | | |
| Comp. 2 | | 5 | | | | | | | 10 | 20 | | | 30 | |
| Comp. 3 | | | 5 | | | | | | | | | | | |
| Comp. 4 | | | | 5 | | | | | | | | | | |
| Comp. 5 | | | | | 5 | | | | | | | | | |
| Comp. 6 | | | | | | 5 | | | | | | | | |
| Comp. 7 | | | | | | | | | | | | | | 5 |
| TTA21 | 24 | 24 | 24 | 24 | 24 | 24 | 22 | 20 | 22 | 18 | 26 | 26 | 14 | 24 |
| TCM241 | 14 | 14 | 14 | 14 | 14 | 14 | 14 | 12 | 12 | 11 | 13 | 13 | 9 | 14 |
| EPX-152 | 18 | 18 | 18 | 18 | 18 | 18 | 18 | 16 | 18 | 16 | 19 | 19 | 16 | 18 |
| TCM101 | 16 | 16 | 16 | 16 | 16 | 16 | 16 | 13 | 15 | 12 | 15 | 15 | 8 | 16 |
| PCL-305 | | | | | | | | | | | 4 | | | |
| SR399 | | 6 | | | | 6 | | 6 | 6 | 6 | 6 | 6 | 6 | 6 |
| DPHA | 6 | | 6 | 6 | 6 | | 6 | | | | | | | |
| PETA | 10 | 10 | 10 | 10 | 10 | 10 | 10 | 10 | 10 | 10 | 10 | 10 | 10 | 10 |
| TMCHA | 2 | 2 | 2 | 2 | 2 | 2 | 2 | 2 | 2 | 2 | 2 | 2 | 2 | 2 |
| PAG201 | 3 | 3 | 3 | 3 | 3 | 3 | 3 | 3 | 3 | 3 | 3 | 3 | 3 | 3 |
| 184 | 2 | 2 | 2 | 2 | 2 | 2 | 2 | 2 | 2 | 2 | 2 | 2 | 2 | 2 |
| BYK A501 | 0.5 | 0.5 | 0.5 | 0.5 | 0.5 | 0.5 | 0.5 | 0.5 | 0.5 | 0.5 | 0.5 | 0.5 | 0.5 | 0.5 |

Compound 1: 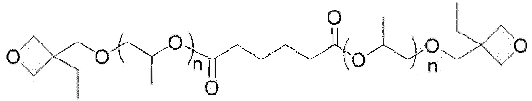 (prepared in accordance with the preparation process of Example 6 in the Chinese patent with Application No. 202110918544.6)
Compound 2: 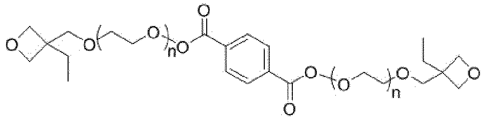 (prepared in accordance with the preparation process of Example 1 in the Chinese patent with Application No. 202110918544.6)
Compound 3: 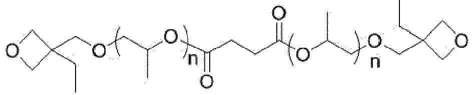 (prepared in accordance with the preparation process of Example 11 in the Chinese patent with Application No. 202110918544.6)
Compound 4: 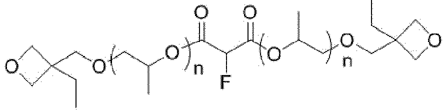 (prepared in accordance with the preparation process of Example 8 in the Chinese patent with Application No. 202110918544.6)
Compound 5: 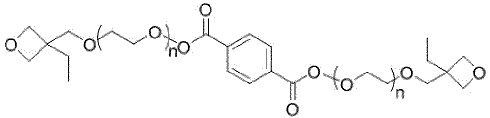 (prepared in accordance with the preparation process of Example 4 in the Chinese patent with Application No. 202110918544.6)
Compound 6: 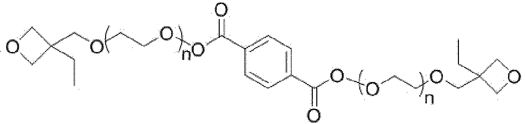 (prepared in accordance with the preparation process of Example 5 in the Chinese patent with Application No. 202110918544.6)
Compound 7: 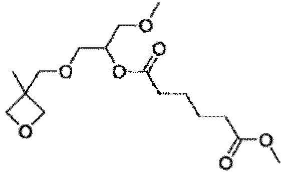 (prepared in accordance with the preparation process of Example 1 in the Chinese patent with Application No. 201910376649.6)
TTA21: 3,4-epoxycyclohexylmethyl 3',4'-epoxycyclohexanecarboxylate (Jiangsu Tetra New Materials)
EPX-152: nanosized core-shell toughening epoxy (LOHO)
TCM101: 3-ethyl-3-oxetanemethanol (CHANGZHOU TRONLY NEW ELECTRONIC MATERIALS CO., LTD.)
PCL-305: polycaprolactone polyol (Juren Chemicals)
SR399: polydipentaerythritol pentaacrylate (Sartomer)
DPHA: dipentaerythritol pentaacrylate (Sartomer)
PETA: pentaerythritol triacrylate (Changzhou Taihan Chemicals)
TMCHA: 3,3,5-trihydroxymethylcyclohexyl acrylate (Changxing Chemicals)
PAG201: triarylsulfonium hexafluoroantimonate (CHANGZHOU TRONLY NEW ELECTRONIC MATERIALS CO., LTD.)
184: 1-hydroxy-cyclohexyl-phenyl methyl ketone (CHANGZHOU TRONLY NEW ELECTRONIC MATERIALS CO., LTD.)
BYK A501: deformer (BYK)
TCM241: hydrogenated bisphenol-A epoxy resin (CHANGZHOU TRONLY NEW ELECTRONIC MATERIALS CO., LTD.)

For the formulations of the photocurable compositions in these examples, comparison tests on viscosity, critical exposure energy Ec, curing depth Dp, flexural strength, flexural modulus, tensile strength, elongation at break, heat deformation temperature, and notched impact strength were carried out. The results were shown in Table 2 and Table 3.

Among them, the test methods for these performance indicators were as follows:
1. Working curve measurement: the working curve was made using an SLA 3D printer (equipment model: Lite 1000 produced by UnionTech) according to the following process, to measure Ec and Dp values.
   The environment was kept at 30°C and 30% RH, and 10 g of the formulated sample was placed in a sample pan with a diameter of 5 cm. With the help of Magic, a model with a size of 10*12*10mm was drawn. The instrument power was set to 160mw, and the scanning interval was 0.03mm. The area was scanned by adjusting different scanning speeds. After the exposure was completed, the sample was taken out from the sample pan after waiting for Imin, and the uncured liquids on the surface were blot up. The thickness of the sample was measured with a thickness gauge (Mitutoyo 547-401). The film thickness was a linear function of the natural logarithm of the exposure energy; the regression slope was Dp (unit: µm), and Ec was the x-axis intercept of the regression fit (unit: mJ/cm²). The tensile strength and elongation at break were tested in accordance with the standard ASTM D638;
2. The flexural modulus and flexural strength were tested in accordance with the standard ASTM D638;
3. The heat deformation temperature (HDT) was tested in accordance with the standard ASTM D648;
4. The notched impact strength was tested in accordance with the standard ASTM D256;

Before testing the mechanical properties and heat deformation temperature of the printed articles, the printed articles should be post-cured, with the following conditions: post-curing in a UV post-curing box (30W) for 20 minutes, and then testing after normal placement for 24 hours.

**Table 2**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Viscosity /cps@25°C | 423.8 | 430.6 | 432.4 | 435.3 | 480.2 | 505.6 | 423.5 | 450.1 |
| Ec /mJ/cm² | 6.2 | 6.5 | 6.3 | 6.7 | 7.1 | 7.5 | 6.8 | 7.1 |
| Dp /mm | 0.14 | 0.13 | 0.13 | 0.13 | 0.13 | 0.13 | 0.13 | 0.12 |
| Tensile strength /MPa | 48 | 52 | 47 | 49 | 50 | 48 | 47 | 46 |
| Elongation at break /% | 9.3 | 8.6 | 8.8 | 7.5 | 9.2 | 9.5 | 15.3 | 20.3 |
| Flexural strength /MPa | 81.5 | 83.6 | 82.4 | 83.1 | 80.6 | 78.3 | 75.5 | 73.3 |
| Flexural modulus /MPa | 2373 | 2412 | 2344 | 2365 | 2359 | 2230 | 2289 | 2210 |
| HDT(0.455MPa)/°C | 65.4 | 68.1 | 63.5 | 60.5 | 64.3 | 62.8 | 59.2 | 56.7 |
| Notched impact strength /J/m | 25.6 | 23.2 | 24.1 | 22.6 | 26.4 | 23.5 | 28.2 | 30.6 |

**Table 3**

| | Ex. 9 | Ex. 10 | Com. Ex. 1 | Com. Ex. 2 | Com. Ex. 3 | Com. Ex. 4 |
|---|---|---|---|---|---|---|
| Viscosity/cps@25°C | 442.4 | 480.2 | 680.2 | 410.2 | 568.5 | 420.6 |
| Ec/mJ/cm² | 6.8 | 7.3 | 5.9 | 6.1 | 7.5 | 8.6 |
| Dp /mm | 0.13 | 0.12 | 0.10 | 0.12 | 0.11 | 0.10 |
| Tensile strength /MPa | 45 | 47 | 43 | 50 | 35 | 33 |
| Elongation at break /% | 10.5 | 13.6 | 5.3 | 2.3 | 22.6 | 15.3 |
| Flexural strength/MPa | 81.5 | 80.6 | 71.2 | 84.2 | 62.4 | 59.3 |
| Flexural modulus /MPa | 2377 | 2356 | 2098 | 2511 | 1896 | 1720 |
| HDT(0.455MPa)/°C | 63.4 | 61.9 | 46.3 | 68.3 | 47.1 | 45.2 |
| Notched impact strength /J/m | 22.3 | 23.3 | 15.2 | 12.6 | 18.4 | 16.8 |

It can be seen from Tables 2 and 3 that when the oxetane oligomer provided in each example of the present invention was added in the range of 5 to 20 parts by weight, the viscosity of the photocurable composition was suitable, the toughness of the three-dimensional manufacturing material was well improved, and both the strength and heat resistance were good; while the photocurable composition in each comparative example was difficult to take into account both strength and toughness.

It can be seen from the aforementioned descriptions that, the above examples of the present invention achieve the following technical effects: the photocurable composition of the present invention has outstanding toughness, and on this basis a relatively high heat resistance is maintained as well as other mechanical properties can reach relatively good levels. The above descriptions are merely preferred embodiments of the present invention and are not intended to limit the present invention. For those skilled in the art, the present invention may have various modifications and changes. Any modification, equivalent replacement, and improvement made within the spirit and principle of the invention shall be included within the scope of the invention.

## Claims

1. A photocurable composition, **characterized in that**, the photocurable composition comprises, by weight:
| | |
|---|---|
| a cationically polymerizable compound | 3 to 20 parts; |
| a free-radically polymerizable compound | 10 to 70 parts; |
| a photoinitiator | 0.2 to 20 parts; |
the cationically polymerizable compound includes an oxetane polymer, which is polymerized from compounds of Formula (I) and Formula (II); 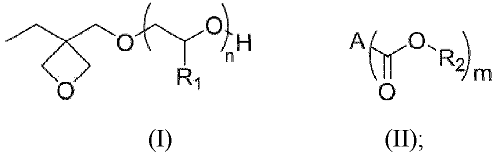
wherein each of n R₁ independently represents hydrogen, or substituted or unsubstituted C₁ to C₂₀ alkyl, and n is an integer of 1 to 20;
each of m R₂ independently represents H, or C₁ to C₂₀ linear or branched alkyl;
A represents any one of a connecting bond, C₁ to C₂₀ linear or branched m-valent alkyl, substituted or unsubstituted C₃ to C₂₀ m-valent cyclic alkyl, substituted or unsubstituted C₆ to C₂₀ m-valent aryl, and substituted or unsubstituted C₄ to C₂₀ m-valent heteroaryl, and the carbon atoms in the above groups are optionally replaced by carbonyl or oxygen atom and H in the above groups may be substituted by halogen, and m is an integer of 1 to 4.

2. The photocurable composition according to claim 1, **characterized in that**, each of n R₁ independently represents hydrogen, unsubstituted C₁ to C₂₀ alkyl, or C₁ to C₂₀ alkyl substituted by halogen, preferably the C₁ to C₂₀ alkyl substituted by halogen is C₁ to C₂₀ alkyl substituted by fluorine; preferably, each of n R₁ independently represents any one of hydrogen, C₁ to C₄ linear or branched alkyl, and C₁ to C₁₅ fluoroalkyl,
more preferably, each of n R₁ independently represents any one of hydrogen, methyl, -(CH₂)ₓ-(CF₂)_{y}-CF₃, or -(CH₂)ₓ-(CF₂)_{y}-CF(CF₃)-CF₃, wherein x represents 0 or 1, and y represents any integer from 0 to 10;
more preferably, each of m R₂ independently represents hydrogen or methyl;
preferably, n is an integer of 1 to 6;
preferably, R₂ represents hydrogen, or C₁ to C₄ linear or branched alkyl; more preferably, R₂ represents any one of hydrogen, methyl, and ethyl;
preferably, A represents any one of a connecting bond, C₁ to C₁₈ linear or branched m-valent alkyl, C₁ to C₅ m-valent alkyl substituted by carbonyl, C₅ to C₆ m-valent cycloalkyl, C₅ to C₆ m-valent cycloalkyl substituted by carbonyl, m-valent phenyl, m-valent phenyl substituted by fluorine, m-valent phenyl substituted by C₁ to C₄ alkoxy, m-valent phenyl substituted by C₁ to C₄ alkyl, C₂ to C₁₀ m-valent alkyl substituted by fluorine, C₂ to C₁₀ m-valent alkyl substituted by fluorine in which at least one carbon atom is replaced by oxygen atom, C₁ to C₄ m-valent alkoxy, and C₄ to C₁₀ m-valent heterocyclyl substituted by C₁ to C₄ alkyl.

3. The photocurable composition according to claim 1 or 2, **characterized in that**, the compound represented by Formula (II) is any one of substituted or unsubstituted C₁ to C₂₀ monocarboxylic acid, substituted or unsubstituted C₂ to C₂₀ dicarboxylic acid, substituted or unsubstituted C₃ to C₂₀ polycarboxylic acid, substituted or unsubstituted C₁ to C₂₀ monocarboxylic ester, substituted or unsubstituted C₂ to C₂₀ dicarboxylic ester, and substituted or unsubstituted C₃ to C₂₀ polycarboxylic ester;
preferably, the compound represented by Formula (II) is any one of substituted or unsubstituted C₂ to C₁₀ dicarboxylic acid, and substituted or unsubstituted C₄ to C₁₈ dicarboxylic ester;
more preferably, the compound represented by Formula (II) is any one or more selected from the following structures:

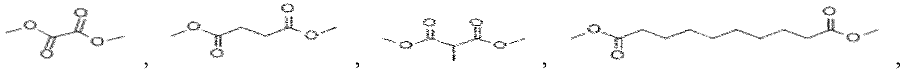

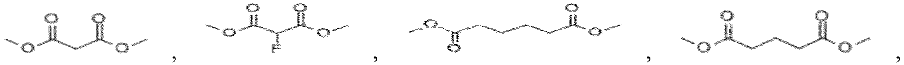

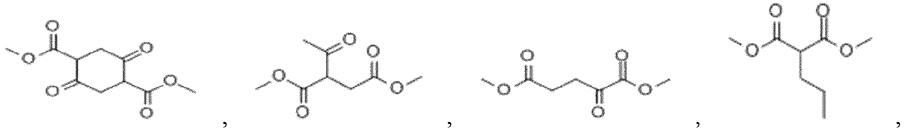

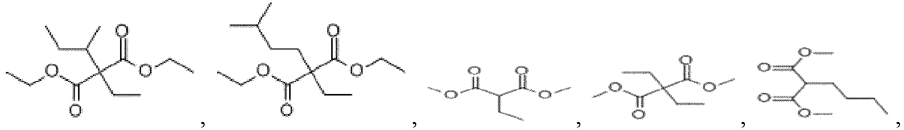

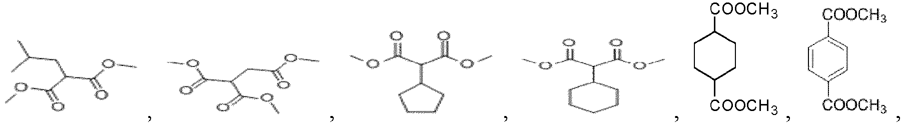

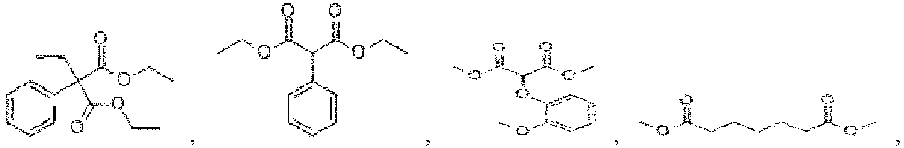

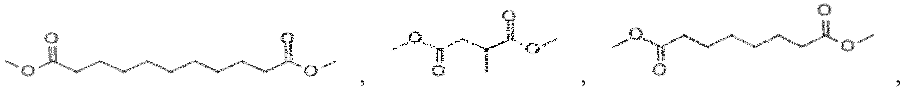

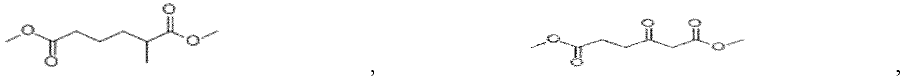

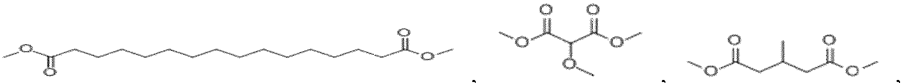

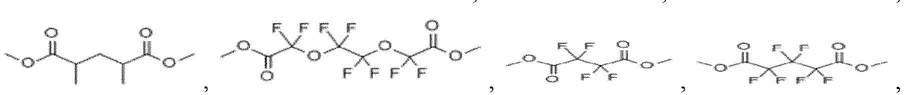

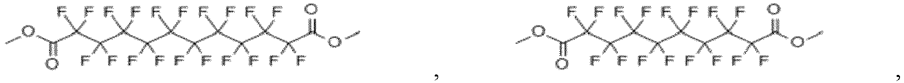

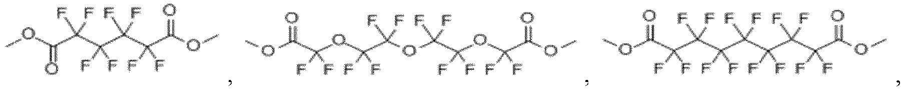

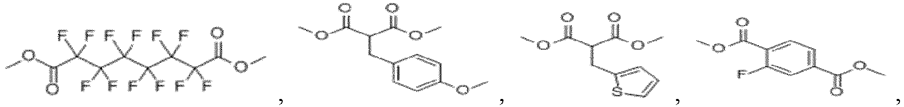

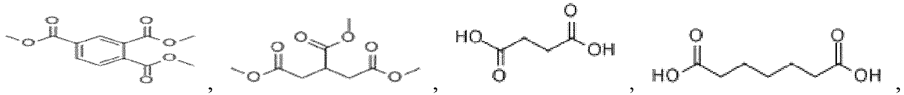

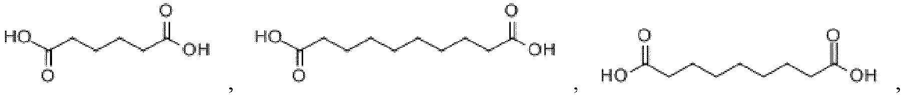

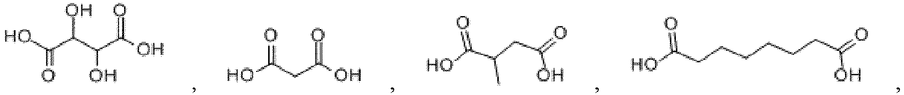

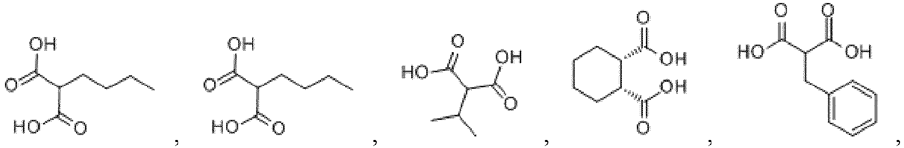

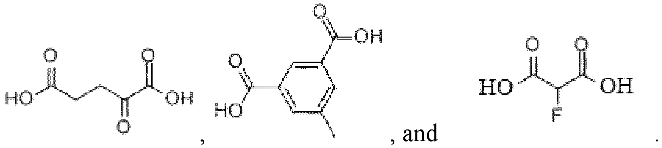

4. The photocurable composition according to any of claims 1 to 3, **characterized in that**, the compound represented by Formula (I) is 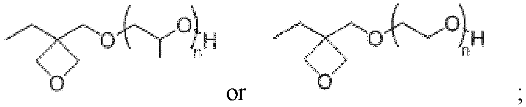 the compound represented by Formula (II) is any one of

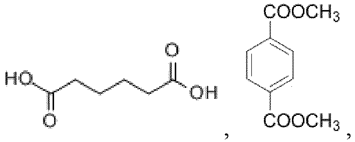

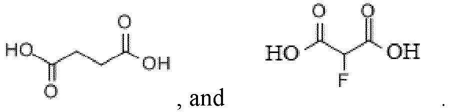

5. The photocurable composition according to any of claims 1 to 4, **characterized in that**, the photocurable composition further comprises 27 to 70 parts by weight of a second cationically polymerizable compound, including:at least one of cyclic ether compounds, cyclic lactone compounds, cyclic acetal compounds, cyclic thioether compounds, spirocyclic ortho-ester compounds, epoxy-functionalized compounds, and oxetane-functionalized compounds;
preferably, the second cationically polymerizable compound is selected from epoxy-functionalized compounds and/or oxetane-functionalized compounds.

6. The photocurable composition according to any of claims 1 to 4, **characterized in that**, the free-radically polymerizable compound includes: monofunctional ethylenically unsaturated compounds and multifunctional ethylenically unsaturated compounds.

7. The photocurable composition according to any of claims 1 to 4, **characterized in that**, the photoinitiator includes a cationic photoinitiator and a free radical photoinitiator;
preferably, the cationic photoinitiator is 0.1 to 10 parts by weight, preferably, the free radical photoinitiator is 0.1 to 10 parts by weight;
preferably, the cationic photoinitiator is selected from one or a combination of two or more of an iodonium salt, a sulfonium salt, and an arylferrocenium salt;
preferably, the iodonium salt has a structure of Formula (III) below, and the sulfonium salt has a structure of Formula (IV) below: 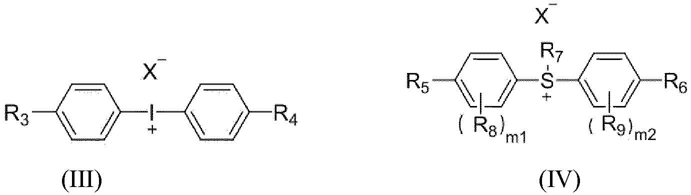
wherein R₃, R₄, R₅, and R₆ each independently represent hydrogen, C₁ to C₂₀ linear or branched alkyl, C₄ to C₂₀ cycloalkylalkyl or alkylcycloalkyl, and the non-cyclic -CH₂- in these groups is optionally substituted by -O-, -S-, or 1,4-phenylene;
R₇ represents substituted or unsubstituted C₆ to C₂₀ aryl, substituted or unsubstituted C₆ to C₂₀ alkylaryl, C₁ to C₂₀ linear or branched alkyl, C₄ to C₂₀ cycloalkylalkyl or alkylcycloalkyl, or substituted or unsubstituted thiophenylphenyl, and the non-cyclic -CH₂- in these groups is optionally substituted by carbonyl, -O-, -S-, or 1,4-phenylene;
R₈ and R₉ each independently represent any one of alkyl, hydroxy, alkoxy, alkylcarbonyl, arylcarbonyl, alkoxycarbonyl, aryloxycarbonyl, arylthiocarbonyl, acyloxy, arylthio, aryl, heterocyclic hydrocarbyl, aryloxy, alkylsulfinyl, arylsulfinyl, alkylsulfonyl, arylsulfonyl, hydroxy(poly)alkyleneoxy, substitutable amino, cyano, nitro, or halogen atom;
m1 and m2 respectively represent the number of R₈ and R₉, and m1 and m2 are each independently selected from 0, 1, 2, 3, or 4;
X⁻ each independently represent M⁻, ClO₄⁻, CN⁻, HSO₄⁻, NO₃⁻, CF₃COO⁻, (BM₄)⁻, (SbM₆)⁻, (AsM₆)⁻, (PM₆)⁻, Al[OC(CF₃)₃]₄⁻, sulfonate ion, B(C₆M₅)₄⁻, or [(Rf)_{b}PF_{6-b}]⁻, where M is halogen, Rf each independently represents alkyl in which ≥80% of hydrogen atoms are substituted by fluorine atoms, and b represents an integer of 1 to 5.

8. The photocurable composition according to any of claims 1 to 4, **characterized in that**, the photocurable composition further comprises a stabilizer, preferably the photocurable composition further comprises a toughener, preferably the photocurable composition further comprises an additive, more preferably the additive includes one or more of organic and inorganic fillers, dyes, pigments, antioxidants, wetting agents, defoamers, chain transfer agents, thickeners, leveling agents, defoamers, ultraviolet absorbers, and surfactants.

9. A photocurable composition for 3D printing comprising a photocurable composition, **characterized in that**, the photocurable composition is the photocurable composition according to any of claims 1 to 8.

10. Use of the photocurable composition for 3D printing according to claim 9, **characterized in that**, the photocurable composition for 3D printing is used for printing process, aerospace, investment casting, or medicine, preferably the printing process includes stereolithography process and/or three-dimensional inkjet printing process.
